# FASCICULE DE BREVET EUROPEEN

(11) **EP 0 758 435 B1**
(45) Date de publication et mention de la délivrance du brevet: **15.10.1997**
(21) Numéro de dépôt: 95916743.8
(22) Date de dépôt: 12.04.1995
(51) Int. Cl.: F16L 37/04, F16L 37/38

(54) **RACCORD INSTANTANE, NOTAMMENT POUR SERVOMOTEUR DE FREINAGE A DEPRESSION**
SCHNELLKUPPLUNG, INSBESONDERE FÜR UNTERDRUCKBREMSKRAFTVERSTÄRKER
QUICK-CONNECT COUPLING, IN PARTICULAR FOR A VACUUM BRAKE SERVO

(30) Priorité: 06.05.1994 FR 9405631
(43) Date de publication de la demande: 19.02.1997
(73) Titulaire: Bosch Systemes de Freinage, 93700 Drancy (FR)
(72) Inventeur: Gautier, Jean-Pierre, F-93600 Aulnay-sous-Bois (FR); Spinello, Salvatore, F-93700 Drancy (FR)
(74) Mandataire: Bentz, Jean-Paul
(86) Numéro de dépôt international: FR9500468
(87) Numéro de publication internationale: WO9530855

(56) Documents cités:
- EP-A- 0 470 605
- CH-A- 350 513
- DE-A- 2 738 108
- DE-A- 4 205 278
- US-A- 2 468 885
- US-A- 4 136 897

## Description

La présente invention concerne un raccord comprenant un tuyau rigide et lisse, de diamètre extérieur déterminé, un conduit auquel ce tuyau est raccordé, une gaine solidaire du conduit et présentant une ouverture que traverse une extrémité du tuyau, et un manchon élastomère logé dans cette gaine, l'intérieur de ce manchon formant une cheminée dans laquelle l'extrémité du tuyau est engagée suivant une première direction axiale.

Des raccords pour tuyaux rigides sont bien connus dans l'art antérieur et se trouvent par exemple décrits dans les documents FR-A-2 012 796 et FR-A-2 080 209.

Les raccords de ce type utilisent traditionnellement des organes expansibles guidés sur des rampes coniques pour enserrer le tuyau avec une force croissant en fonction de la force d'arrachement exercée sur le tuyau.

En dépit de son efficacité, un tel principe conduit à la nécessité de recourir à un nombre de pièces élevées pour réaliser le raccord, et à un temps de montage non négligeable pour la mise en place du tuyau.

D'autres raccords, plus simples, tels que celui décrit par exemple dans le brevet DE 2 738 108, prévoient le montage direct du tuyau sur le conduit sans l'aide d'aucun manchon ni d'aucune gaine, mais sont totalement impropres aux applications dans lesquelles un effort d'arrachage important est nécessaire entre le tuyau et le conduit.

Un raccord comportant un manchon élastomère est par ailleurs décrit dans le brevet US 2 468 885.

Si ce raccord permet certainement d'atteindre des valeurs élevées de l'effort d'arrachage, en revanche il ne peut pas constituer un raccord instantané dans la mesure où le maintien du tuyau est obtenu par un sertissage de la gaine après la mise en place du tuyau dans le manchon.

Le brevet DE 42 05 278 décrit lui-aussi un raccord du type précité, dans lequel un premier tronçon au moins de la cheminée que forme le manchon est constitué par une pluralité de sections dont chacune présente au repos un diamètre interne évoluant, suivant la direction axiale d'engagement du tuyau, entre une valeur haute, supérieure à celle du diamètre extérieur du tuyau, et une valeur basse inférieure à celle de ce diamètre extérieur, et dans lequel l'ouverture de la gaine comprend un rebord interdisant l'extraction du manchon hors de cette gaine suivant une direction inverse de la direction axiale d'engagement du tuyau.

Cependant, un tel raccord est visiblement destiné à des tuyaux présentant un diamètre élevé par rapport à l'épaisseur du manchon et nécessitant un maintien supplémentaire du tuyau par rapport au conduit.

La présente invention se situe dans ce contexte, et a pour but de proposer un raccord instantané de structure simple, opposant une résistance importante à un effort d'arrachage du tuyau, et utilisable pour raccorder un servomoteur d'assistance de freinage à une source de dépression.

A cette fin, le raccord de la présente invention est essentiellement caractérisé en ce que la gaine est formée de deux parties assemblées l'une à l'autre par rapprochement suivant la première direction axiale, et en ce que le manchon élastomère se prolonge, à l'extérieur de la gaine, par un second tronçon de forme cylindrique et présentant un diamètre intérieur au plus égal au diamètre extérieur du tube.

Lorsque le raccord de l'invention est utilisé pour raccorder un servomoteur d'assistance de freinage à une source de dépression, l'une des parties de la gaine porte alors avantageusement un clapet pneumatique anti-retour.

Dans ces conditions, le tuyau, par exemple en polyamide, peut être instantanément raccordé au servomoteur.

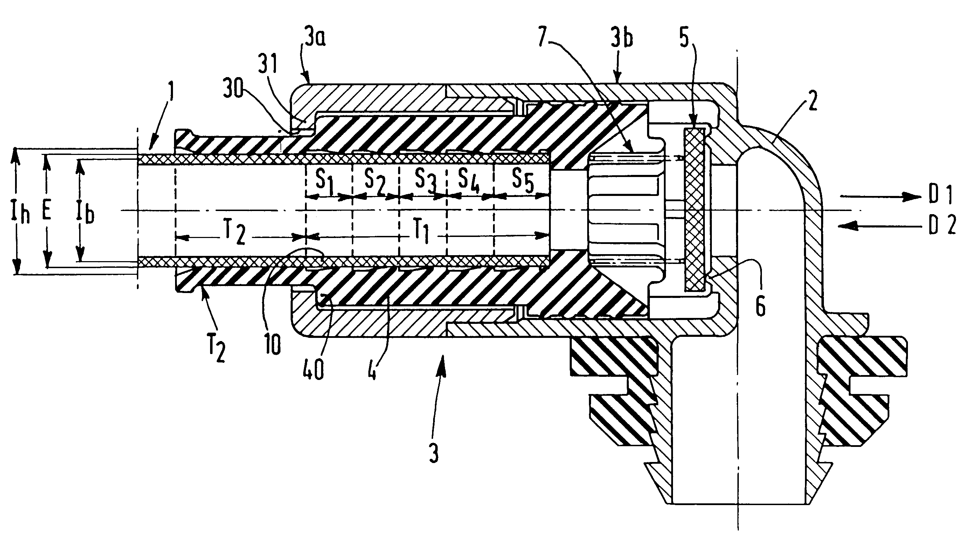

D'autres caractéristiques et avantages de l'invention ressortiront clairement de la description qui en est faite ci-après, à titre indicatif et nullement limitatif, en référence à la figure unique qui est une vue en coupe d'un raccord conforme à l'invention.

Comme le montre cette figure, ce raccord comprend un tuyau 1 rigide et lisse, de diamètre extérieur E déterminé, un conduit 2 auquel ce tuyau est raccordé, une gaine 3 solidaire du conduit et un manchon élastomère 4 logé dans cette gaine.

La gaine 3 présente une ouverture 30 que traverse une extrémité 10 du tuyau, et l'intérieur du manchon 4 forme une cheminée dans laquelle cette extrémité est engagée suivant une première direction axiale D1.

Un premier tronçon au moins T1 de cette cheminée est formé par une pluralité de sections S1, S2, S3, S4, S5 dont chacune présente au repos un diamètre interne évoluant, suivant la première direction axiale D1, entre une valeur haute Ih, supérieure à celle du diamètre extérieur E du tuyau, et une valeur basse Ib, inférieure à celle de ce diamètre extérieur E.

Par ailleurs, l'ouverture 30 de la gaine est formée dans un rebord 31 coopérant avec un épaulement 41 du manchon 4 et interdisant l'extraction de ce manchon hors de la gaine 3 suivant une direction D2 inverse de la première direction axiale D1.

De préférence, le manchon élastomère 3 se prolonge, à l'extérieur de la gaine, par un second tronçon T2 de forme cylindrique et présentant un diamètre intérieur au plus égal au diamètre extérieur E du tube.

Dans l'exemple illustré, qui correspond à une application privilégiée de l'invention, la gaine 3 est formée de deux parties 3a, 3b assemblées l'une à l'autre par rapprochement suivant la première direction axiale D1 et collage ou soudage, et l'une des parties 3b de la gaine 3 porte un clapet pneumatique anti-retour, lui-même constitué d'un obturateur 5 sollicité contre un siège 6 par un ressort 7.

En pratique, le raccord de l'invention peut être utilisé avec un tuyau en polyamide ou en "RILSAN".

## Revendications

1. Raccord comprenant un tuyau (1) rigide et lisse, de diamètre extérieur déterminé (E), un conduit (2) auquel ce tuyau est raccordé, une gaine (3) solidaire du conduit et présentant une ouverture (30) que traverse une extrémité (10) du tuyau, et un manchon élastomère (4) logé dans cette gaine, l'intérieur de ce manchon formant une cheminée dans laquelle l'extrémité du tuyau est engagée suivant une première direction axiale (D1), un premier tronçon (T1) au moins de cette cheminée étant formé par une pluralité de sections (S1, S2, S3, S4, S5) dont chacune présente au repos un diamètre interne évoluant, suivant la première direction axiale (D1), entre une valeur haute (Ih), supérieure à celle du diamètre extérieur du tuyau, et une valeur basse (Ib), inférieure à celle de ce diamètre extérieur, et l'ouverture (30) de la gaine comprenant un rebord interdisant l'extraction du manchon hors de cette gaine suivant une direction (D2) inverse de la première direction axiale, caractérisé en ce que la gaine est formée de deux parties (3a, 3b) assemblées l'une à l'autre par rapprochement suivant la première direction axiale (D1), et en ce que le manchon élastomère (4) se prolonge, à l'extérieur de la gaine (3), par un second tronçon (T2) de forme cylindrique et présentant un diamètre intérieur au plus égal au diamètre extérieur (E) du tube

2. Raccord suivant la revendication 1, caractérisé en ce que l'une des parties de la gaine porte un clapet pneumatique anti-retour (5, 6, 7).

3. Raccord suivant l'une quelconque des revendications précédentes, caractérisé en ce que le tuyau (1) est en polyamide.

## Patentansprüche

1. Anschlußstück mit einem starren und glatten Rohr (1) von bestimmtem Außendurchmesser (E), einer Leitung (2), an welche das Rohr angeschlossen ist, einem Mantel (3), der fest mit der Leitung verbunden ist und eine Öffnung (30) aufweist, die von einem Ende (10) des Rohres durchquert wird, und einer Elastomerhülse (4), die in dem Mantel aufgenommen ist, wobei das Innere dieser Hülse eine Führung bildet, in welche das Ende des Rohres entlang einer ersten axialen Richtung (D1) eingreift, wobei wenigstens ein erstes Teilstück (T1) dieser Führung durch eine Anzahl von Abschnitten (S1, S2, S3, S4, S5) gebildet ist, von denen jeder im Ruhezustand einen Innendurchmesser aufweist, der sich in der ersten axialen Richtung (D1) zwischen einem großen Wert (Ih), der größer als derjenige des Außendurchmessers des Rohres ist, und einem niedrigen Wert (Ib) ändert, der kleiner als derjenige des Außendurchmessers ist, wobei die Öffnung (30) des Mantels einen umgebogenen Rand aufweist, der das Herausbewegen der Hülse aus dem Mantel entlang einer zur ersten axialen Richtung entgegengesetzten Richtung (D2) verhindert, dadurch gekennzeichnet, daß der Mantel aus zwei Abschnitten (3a, 3b) gebildet ist, die miteinander durch Zusammenbewegen entlang der ersten axialen Richtung (D1) verbunden werden, und daß die Elastomerhülse (4) außerhalb des Mantels (3) durch ein zweites Teilstück (T2) mit zylindrischer Form verlängert ist, das einen Innendurchmesser hat, der höchstens gleich dem Außendurchmesser (E) des Rohres ist.

2. Anschlußstück nach Anspruch 1, dadurch gekennzeichnet, daß einer der Abschnitte des Mantels ein pneumatisches Rückschlagventil (5, 6, 7) trägt.

3. Anschlußstück nach einem der vorhergehenden Ansprüche, dadurch gekennzeichnet, daß das Rohr (1) aus Polyamid besteht.

## Claims

1. Coupling comprising a rigid and smooth pipe (1), of given outside diameter (E), a line (2) to which this pipe is coupled, a casing (3) secured to the line and exhibiting an opening (30) through which one end (10) of the pipe passes, and an elastomer sleeve tube (4) housed in this casing, the inside of this sleeve tube forming a hollow shaft into which the end of the pipe is engaged in a first axial direction (D1), at least a first length (T1) of this hollow shaft being formed by a plurality of sections (S1, S2, S3, S4, S5) each of which at rest exhibits an internal diameter which changes, in the first axial direction (D1), between a high value (Ih), greater than that of the outside diameter of the pipe, and a low value (Ib), less than that of this outside diameter, and the opening (30) in the casing comprising a rim preventing the sleeve tube from being extracted from this casing in a direction (D2) which is the opposite of the first axial direction, characterized in that the casing is formed of two parts (3a, 3b) which are assembled together by being brought together in the first axial direction (D1), and in that the elastomer sleeve tube (4) is extended, outside the casing (3), by a second length (T2) of cylindrical shape and exhibiting an inside diameter which is at most equal to the outside diameter (E) of the tube.

2. Coupling according to Claim 1, characterized in that one of the parts of the casing carries a pneumatic non-return valve (5, 6, 7).

3. Coupling according to either one of the preceding claims, characterized in that the pipe (1) is made of polyamide.
